Europäisches Patentamt

European Patent Office

Office européen des brevets

(11) Numéro de publication: **0 379 877**

**A1**

## (12) DEMANDE DE BREVET EUROPEEN

(21) Numéro de dépôt: **90100272.5**

(51) Int. Cl.5: **B23Q 1/02, B23C 1/00**

(22) Date de dépôt: **08.01.90**

(30) Priorité: **25.01.89 CH 218/89**

(43) Date de publication de la demande:
**01.08.90 Bulletin 90/31**

(84) Etats contractants désignés:
**AT BE DE ES FR GB IT NL**

(71) Demandeur: **DIXI S.A.**
**Avenue du Technicum 42**
**CH-2400 Le Locle(CH)**

(72) Inventeur: **Roesch, Edouard**
**Rue de la Capitaine 5c**
**CH-2300 La Chaux-De-Fonds(CH)**

(74) Mandataire: **Robert, Jean S.**
**51, route du Prieur**
**CH-1257 Landecy (Genève)(CH)**

(54) **Machine-outil.**

(57) La broche (2) de la machine est montée sur un chariot (4) se déplaçant le long d'une traverse horizontale (6) portée par les montants (1a) d'une partie du bâti (1) de la machine en forme de portique fermé, et qui est située en avant de ces montants. Cette traverse (6) se déplace verticalement le long desdits montants (1a). La table porte-pièce (8), qui peut tourner sur elle-même, est montée sur un chariot (10) se déplaçant dans la direction de la flèche (11), sur une partie (1b) du bâti située en avant du portique (1). La machine est ainsi compacte et, quelles que soient les positions extrêmes de ses éléments mobiles, il ne se produit aucun porte-à-faux générateur de déformations.

FIG. 1

## Machine-outil.

La présente invention a pour objet une machine-outil à broche rotative horizontale, dont le bâti est à portique fermé.

Les machines-outils de ce type, le plus généralement des aléseuses, ont habituellement le support de broche situé entre les montants du portique entre lesquels il se déplace verticalement. Quant à la table porte-pièce, elle est montée en avant dudit portique de manière à pouvoir se déplacer dans deux directions perpendiculaires l'une à l'autre, l'une transversale, c'est-à-dire perpendiculaire à l'axe de la broche, et l'autre longitudinale, c'est-à-dire parallèle à cet axe.

L'inconvénient de cette disposition réside dans le fait que, lorsque la table se trouve fortement décentrée, au voisinage de l'une ou l'autre de ses positions transversales extrêmes, le bâti de la machine subit une déformation telle que la précision de l'usinage s'en ressent. L'effet pernicieux de cette déformation est d'autant plus sensible que le point où s'effectue l'usinage est éloigné de la surface de la table. En d'autres termes, l'effet pernicieux de la déformation du bâti est d'autant plus sensible que la broche est située en position plus élevée. La raison en est que le mouvement basculant que subit la pièce du fait de la déformation du bâti peut être considéré comme ayant son centre au voisinage de la surface de la table et est, par conséquent, amplifié par la distance entre celle-ci et le point considéré.

Un autre inconvénient dû à la construction habituelle de telles machines réside dans le fait que, l'espace situé à l'intérieur du portique étant occupé par le support de broche qui doit pouvoir le parcourir tout entier, il n'est guère possible de procéder à des mesures de contrôle de la déformation du bâti, par exemple en utilisant des rayons laser, car ceux-ci seraient interceptés par le support de broche.

Ces machines présentent encore l'inconvénient d'occuper, en avant du portique, un grand espace en largeur, dû au fait que la table doit pouvoir se déplacer transversalement, ce qui n'est pas commode pour la distribution des accessoires de la machine, et interdit, en particulier, de placer un changeur d'outils en avant du portique.

La présente invention a pour but de remédier à ces inconvénients.

Ce but est atteint grâce aux moyens définis dans la revendication 1.

Le dessin représente, à titre d'exemple, deux formes d'exécution de l'objet de l'invention.

La fig. 1 est une vue en perspective, schématique, d'une aléseuse à broche horizontale, et

La fig. 2 est une vue en perspective, également schématique, d'un centre d'usinage comprenant une aléseuse à broche horizontale.

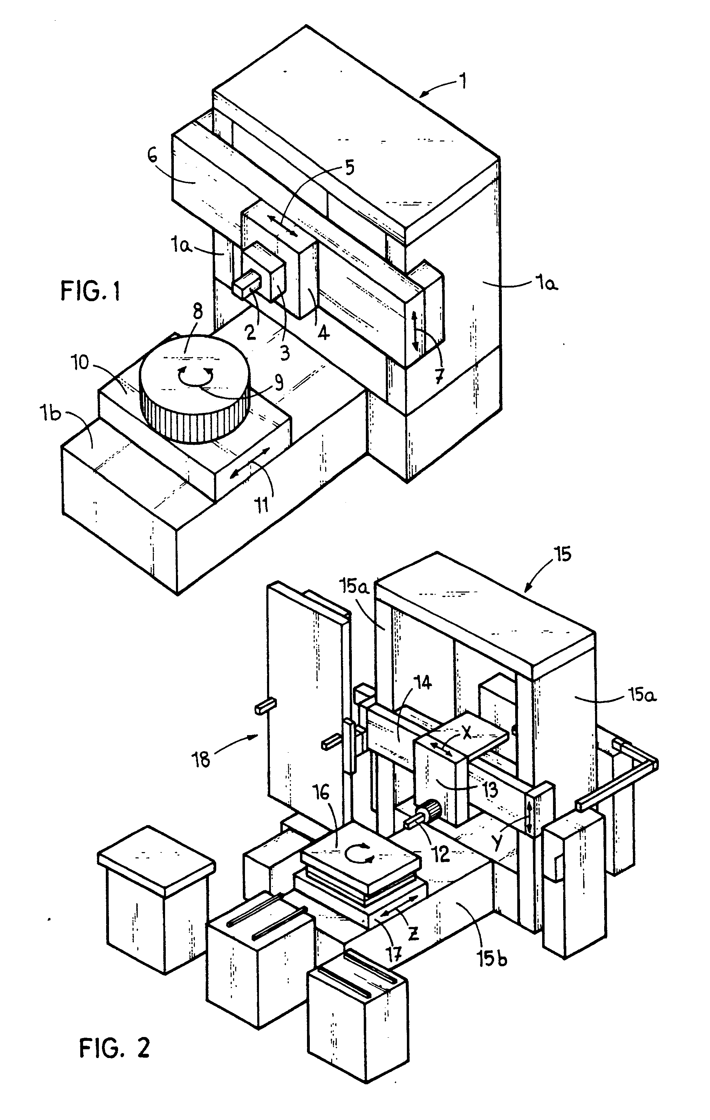

La machine représentée à la fig. 1 comprend un bâti en forme de portique fermé, désigné d'une façon générale par 1, dont les deux montants verticaux sont désignés par 1a, qui se prolonge par un banc horizontal 1b situé en avant desdits montants.

La broche de la machine, à axe horizontal, désignée par 2, est portée par une poupée 3, elle-même montée sur un chariot 4 se déplaçant transversalement, c'est-à-dire perpendiculairement à l'axe de la broche 2, dans la direction de la flèche 5, correspondant à l'axe des X, le long d'une traverse horizontale 6 portée par les montants 1a du portique. Cette traverse est située en avant des montants, le long desquels elle se déplace verticalement dans la direction de la flèche 7 qui correspond à l'axe des Y.

La table porte-pièce, représentée schématiquement en 8, est montée de façon à pouvoir tourner sur elle-même, comme indiqué par la flèche 9, et est portée par un chariot 10 qui se déplace longitudinalement, c'est-à-dire parallèlement à l'axe de la broche, dans la direction de la flèche 11 qui correspond à l'axe des Z.

Ainsi, grâce à la géométrie générale de la machine, il n'y a pas de porte-à-faux, quelles que soient les positions extrêmes que peuvent occuper les différents organes mobiles, de sorte qu'il n'y a pas de déformation exagérée du bâti.

De plus, l'intérieur du portique est entièrement libre, ce qui permet de contrôler aisément des déformations éventuelles par des visées optiques ou par l'application de rayons laser que rien ne vient gêner. Il est aisé, en particulier, de contrôler la position, en hauteur, de chacune des extrémités de la traverse horizontale 6 portant le chariot 4, et de la corriger si nécessaire en agissant à une extrémité ou à l'autre de ladite traverse par des vis verticales logées dans les montants 1a, qui servent à soutenir la traverse et à commander ses déplacements.

Il est à remarquer que les points d'ancrage de la machine au sol seront au nombre de trois, deux étant placés à l'arrière des colonnes ou montants verticaux 1a du bâti et le troisième sensiblement au centre du banc horizontal 1b.

Dans le centre d'usinage représenté à la fig. 2, on retrouve une machine du genre de celle de la fig. 1, constituée par une aléseuse à broche horizontale 12, portée par un chariot 13 se déplaçant suivant l'axe des X le long d'une traverse horizontale 14 se déplaçant elle-même suivant l'axe des Y le long des deux montants 15a d'un portique fermé, désigné d'une façon générale par 15, faisant partie du bâti de la machine. Une table porte-pièce rotative 16 est montée sur un chariot 17 se déplaçant suivant l'axe des Z sur une partie 15b du bâti située en avant du portique 15.

Comme on le voit, l'environnement de la machine est libre pour recevoir des éléments accessoires tels que, notamment, un changeur d'outils, désigné d'une façon générale par 18. Grâce au fait que ce changeur d'outils est situé en avant du portique 15, la broche peut venir se saisir directement des outils qu'il porte, sans même qu'il soit nécessaire de prévoir un bras transporteur, et encore moins un bras transporteur effectuant un mouvement de conversion, comme c'est nécessairement le cas lorsque le magasin d'outils ne peut pas être situé en avant du portique, ce qui nécessite d'aller chercher les outils à l'arrière de la machine, et de les ramener en avant de celle-ci, en un mouvement pivotant.

## Revendications

1. Machine-outil à broche rotative horizontale, dont le bâti est à portique fermé, caractérisée bar le fait que ladite broche est portée par un chariot se déplaçant transversalement par rapport à la broche, le long d'une traverse horizontale montée sur les montants du portique, en avant de ceux-ci, le long desquels elle se déplace verticalement, la table de la machine, située en avant desdits montants, étant montée de façon à se déplacer longitudinalement, c'est-à-dire parallèlement à l'axe de la broche.

2. Machine-outil suivant la revendication 1, caractérisée par le fait qu'elle comprend un échangeur d'outil situé en avant dudit portique.

FIG.1

FIG. 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-2 739 087 (KOMATSU)<br>* Page 12, alinéa 1 - page 14, alinéa 1 *<br>--- | 1,2 | B 23 Q 1/02<br>B 23 C 1/00 |
| Y | CH-A- 260 363 (DIXI)<br>* En entier *<br>--- | 1,2 | |
| A | WERKSTATT UND BETRIEB, vol. 107, no. 8, août 1974, pages 484-485; T. STÖFERLE: "Auslegung eines Produktionsbohrwerks"<br>* Page 485, figure 4 *<br>----- | 1 | |

DOMAINES TECHNIQUES RECHERCHES (Int. Cl.5)

B 23 Q
B 23 C

Le présent rapport a été établi pour toutes les revendications

| Lieu de la recherche | Date d'achèvement de la recherche | Examinateur |
|---|---|---|
| LA HAYE | 06-05-1990 | DE GUSSEM J.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.....................................................
& : membre de la même famille, document correspondant

EPO FORM 1503 03.82 (P0402)